# EUROPÄISCHE PATENTSCHRIFT

(11) **EP 0 718 956 B1**
(45) Veröffentlichungstag und Bekanntmachung des Hinweises auf die Patenterteilung: **13.05.1998**
(21) Anmeldenummer: 95117898.7
(22) Anmeldetag: 14.11.1995
(51) Int. Cl.: H02K 5/10, H02K 5/124, H02K 7/20

(54) **Abgedichtete Drehwinkel-Messvorrichtung**
Sealed rotation angle measuring device
Dispositif étanche de mesure de l'angle de rotation

(30) Priorität: 23.12.1994 DE 4446243
(43) Veröffentlichungstag der Anmeldung: 26.06.1996
(73) Patentinhaber: MAX STEGMANN GmbH ANTRIEBSTECHNIK - ELEKTRONIK, D-78166 Donaueschingen (DE)
(72) Erfinder: Siraky, Josef, D-78166 Donaueschingen (DE)
(74) Vertreter: Patentanwälte Westphal, Buchner, Mussgnug Neunert, Göhring

(56) Entgegenhaltungen:
- GB-A- 2 117 572
- PATENT ABSTRACTS OF JAPAN vol. 017, no. 541 (M-1488), 29.September 1993 & JP-A-05 147868 (MITSUBISHI ELECTRIC CORP), 15.Juni 1993,
- PATENT ABSTRACTS OF JAPAN vol. 012, no. 065 (E-586), 27.Februar 1988 & JP-A-62 207153 (TAMAGAWA SEIKI KK), 11.September 1987,
- PATENT ABSTRACTS OF JAPAN vol. 004, no. 045 (M-006), 9.April 1980 & JP-A-55 014938 (TSURUMI SEISAKUSHO:KK), 1.Februar 1980,

## Beschreibung

Die Erfindung betrifft eine an einen Motor anbaubare Drehwinkel-Meßvorrichtung gemäß dem Oberbegriff des Anspruchs 1.

Drehwinkel-Meßvorrichtungen werden vorzugsweise an Motoren, insbesondere Elektromotoren angebaut, um die Winkelstellung, die Drehzahl usw. der Motorwelle für Steuer- und Regelzwecke zu bestimmen.

Beim Anbau der Drehwinkel-Meßvorrichtung an den Motor tritt das Problem auf, daß Schmutz in das Gehäuse der Meßvorrichtung eindringen und die Funktionsfähigkeit der Meßvorrichtung beeinträchtigen kann. Die Verschmutzung ist insbesondere bei Meßvorrichtungen mit optischer Abtastung störend.

Obwohl Abdichtungen für solche Meßvorrichtungen bekannt sind - siehe z.B. Patent Abstracts of Japan, vol. 017, no. 541 (M-1488), 29/09/93 & JP-A- 05 147 868, 15/06/93, ist eine das Eindringen von verschmutzter Luft in das Gehäuse der Meßvorrichtung verhindernde Abdichtung bisher nicht möglich. Dies beruht darauf, daß Motoren eine hohe Temperaturdifferenz zwischen dem Betriebszustand und dem Ruhezustand aufweisen. Beispielsweise werden Elektromotoren mit einer Wicklungstemperatur von bis zu 150°C betrieben. Die hohe Betriebstemperatur erhöht den Luftdruck in dem Motorgehäuse, so daß die mit Schmiermittel, Staub und Abrieb beladene Luft aus dem Motorgehäuse über die Wellendurchführung und deren Abdichtung in das Gehäuse der Meßvorrichtung gedrückt wird. Beim Abkühlen des Motors entsteht im Motorgehäuse ein Unterdruck, wodurch wieder staubbeladene Luft aus der Umgebung in das Motorgehäuse angesaugt wird. Durch dieses "Atmen" des Motors wird somit bei jedem Einschalten des Motors eine gewisse Menge der mit Schmutz beladenen Luft aus dem Motorgehäuse in das Gehäuse der Meßeinrichtung gepumpt.

Aus der DE 33 01 205 A ist eine Drehwinkel-Meßvorrichtung bekannt, bei welcher auf der Welle der Meßvorrichtung mittels Kugellagern drehbar ein Statorteil gelagert ist, welches die Abtastung für die Winkelstellung der Welle trägt. Das Statorteil ist über eine axial und radial nachgiebige, jedoch verdrehsteife Balgkupplung mit dem Gehäuse der Meßvorrichtung verbunden. Die Balgkupplung dichtet das Gehäuse der Meßvorrichtung nicht ab, da die Luft über die Lager des Statorteils in das Gehäuseinnere eindringen kann. Eine ähnliche Anordnung, jedoch mit einer flächigen Membrankupplung, ist aus der GB-A-2 117 572 bekannt.

Der Erfindung liegt die Aufgabe zugrunde, eine Drehwinkel-Meßvorrichtung zu schaffen, die sich für den Anbau an einen Motor eignet und das Eindringen von verschmutzter Luft aus dem Motorgehäuse in das Gehäuse der Meßvorrichtung verhindert.

Diese Aufgabe wird bei einer Drehwinkel-Meßvorrichtung der eingangs genannten Gattung erfindungsgemäß gelöst durch die Merkmale des Anspruchs 1.

Vorteilhafte Ausführungen der Erfindung sind in den Unteransprüchen angegeben.

Der Erfindung liegt zunächst die Erkenntnis zugrunde, daß das vorstehend beschriebene "Atmen" des Motors eine wesentliche Ursache für das Eindringen von verschmutzter Luft in das Gehäuse der Meßvorrichtung darstellt. Das Eindringen der Luft aus dem Motorgehäuse in das Gehäuse der Meßvorrichtung erfolgt, um die durch die hohe Motortemperatur verursachte Druckdifferenz zwischen dem Motorgehäuse und dem Gehäuse der Meßvorrichtung auszugleichen. Der Erfindung liegt weiter die Erkenntnis zugrunde, daß dieser Druckausgleich nicht durch herkömmliche Wellenabdichtungen verhindert werden kann. Von dieser Erkenntnis ausgehend besteht der Grundgedanke der Erfindung darin, das Gehäuse der Meßvorrichtung durch ein flexibel verformbares Dichtungselement zu verschließen. Dieses Dichtungselement verformt sich unter dem Einfluß der Druckdifferenz zwischen dem Motorgehäuse und dem Gehäuse der Meßvorrichtung. Die Verformung des Dichtungselements bewirkt eine Vergrößerung des Luftvolumens des Motorgehäuses und eine Verkleinerung des Luftvolumens des Gehäuses der Meßvorrichtung, bis beiderseits des Dichtungselements, d.h. in dem Motorgehäuse und in dem Gehäuse der Meßvorrichtung gleicher Luftdruck herrscht. Das Dichtungselement folgt somit wie eine Lunge dem Atmen des Motors. Da durch die Atmungsbewegung des Dichtungselements keine Druckdifferenz zwischen dem Motorgehäuse und dem Gehäuse der Meßvorrichtung entstehen kann, tritt auch keine verschmutzte Luft aus dem Motorgehäuse über die Wellenabdichtung des Dichtungselements in das Gehäuse der Meßvorrichtung ein.

Das Dichtungselement besteht zumindest in seinen flexiblen Teilbereichen vorzugsweise aus einem gummielastischen Material, welches mit der erforderlichen nachgiebigen Verformbarkeit ausgebildet sein kann.

Im Hinblick auf die Herstellungskosten ist es besonders vorteilhaft, das Dichtungselement als einstückige Scheibe aus dem gummielastischen Material herzustellen. Vorzugsweise wird die Scheibe mit konzentrischen radial aufeinander folgenden Wellen ausgebildet. Dadurch ergibt sich einerseits die notwendige Formstabilität und Winkelsteifigkeit der Scheibe und andererseits ist eine ausreichende flexible Verformbarkeit insbesondere in axialer Richtung gewähleistet.

In einer zweckmäßigen Ausführung kann das Dichtungselement mit seinem äußeren Umfangsrand zwischen dem Motorgehäuse und dem Gehäuse der Meßvorrichtung festgelegt werden. Dadurch ist einerseits eine zuverlässige Abdichtung zwischen dem Gehäuse und dem Dichtungselement gewährleistet und andererseits sind keine zusätzlichen Befestigungsmittel für das Dichtungselement erforderlich, die die Herstellung und Montage verteuern würden.

Da zwischen dem Motorgehäuse und dem Gehäuse der Meßvorrichtung kein Druckgefälle auftritt, ist eine ausreichende Abdichtung der Welle gewährleistet, wenn das feststehende Dichtungselement mit wenigstens einer Dichtlippe an der rotierenden Welle anliegt.

Wird das erfindungsgemäße Dichtungselement bei einer Drehwinkel-Meßvorrichtung verwendet, bei welcher ein Statorteil drehbar auf der Welle gelagert ist, so kann das Dichtungselement gleichzeitig als radial und axial nachgiebige, winkelsteife Kupplung zur Abstützung des Statorteils an dem Gehäuse dienen. Das Statorteil wird in einem radial mittleren Ringbereich an dem Dichtungselement festgelegt. Das Dichtungselement hält das Statorteil verdrehfest in dem Gehäuse, wobei die Flexibilität des Dichtungselements axiale und radiale Bewegungen des Statorteils aufgrund von Fluchtungsfehlern der Welle zuläßt. Der radial innere Bereich des Dichtungselements zwischen der Welle und der Befestigung des Statorteils erfüllt dabei die Atmungsfunktion, um ein Druckgefälle zwischen Motorgehäuse und Gehäuse der Meßvorrichtung zu verhindern.

Im folgenden wird die Erfindung anhand eines in der Zeichnung dargestellten Ausführungsbeispiels näher erläutert. Es zeigen
- Figur 1: schematisch einen Axialschnitt eines Elektromotors mit angebauter Drehwinkel-Meßvorrichtung,
- Figur 2: eine Draufsicht auf das Dichtungselement der Meßvorrichtung
- Figur 3: einen Axialschnitt des Dichtungselements und
- Figur 4: schematisch einen Figur 1 entsprechenden Axialschnitt einer abgewandelten Ausführung.

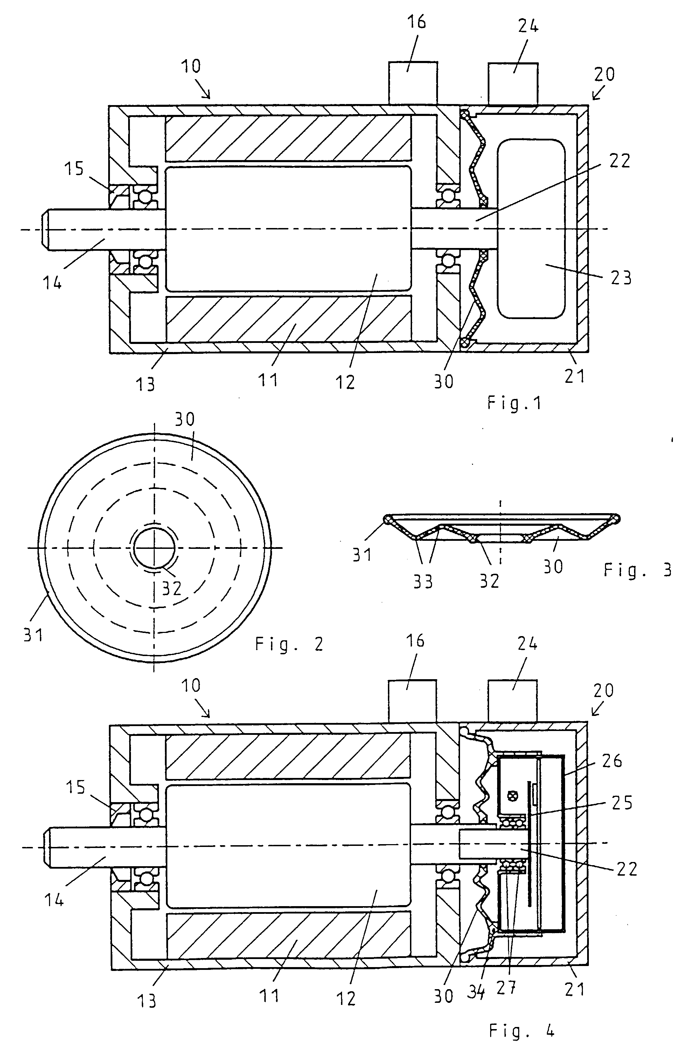

In dem Ausführungsbeispiel der Figur 1 ist schematisch ein Elektromotor 10 mit einem Stator 11, einem Rotor 12 und einem Motorgehäuse 13 gezeigt. Der Rotor 12 sitzt auf einer Motorwelle 14, die über eine Wellendichtung 15 aus dem Motorgehäuse 13 herausgeführt ist. Elektrische Anschlüsse 16 dienen zur Speisung und Steuerung des Elektromotors 10.

An dem der Abtriebseite der Motorwelle 14 entgegengesetzten Ende ist an den Elektromotor 10 eine Drehwinkel-Meßvorrichtung 20 angebaut. Die Meßvorrichtung 20 weist ein topfförmiges Gehäuse 21 auf, das mit seiner offenen axialen Stirnseite an die zugewandte axiale Stirnseite des Motorgehäuses 13 angebaut ist. Die Meßvorrichtung 20 weist eine Welle 22 auf, die axial fluchtend an die Motorwelle 14 angekuppelt ist oder eine Verlängerung der Motorwelle 14 bildet. Der Drehwinkel der Welle 22 wird durch eine an sich bekannte Abtastung 23 ermittelt. Die Abtastung 23 kann beispielsweise ein Statorteil mit einer optischen Abtastung sein, die eine auf der Welle 22 sitzende Scheibe mit Winkelmarkierungen abtastet. Über elektrische Anschlüsse 24 werden die Meßvorrichtung gespeist und die Meßwerte ausgelesen.

Zwischen das Gehäuse 21 der Drehwinkel-Meßvorrichtung 20 und das Motorgehäuse 13 des Elektromotors 10 ist ein Dichtungselement 30 eingesetzt, welches mit seinem äußeren Umfangsrand zwischen dem Gehäuse 21 und dem Motorgehäuse 13 festgelegt ist und mit seinem inneren Umfangsrand dichtend an der Welle 22 anliegt. Das Dichtungselement 30 ist zumindest in einem Teilbereich seiner Fläche flexibel verformbar, so daß es einem Druckgefälle zwischen dem Inneren des Motorgehäuses 13 und dem Inneren des Gehäuses 21 nachgeben kann.

In den Figuren 2 und 3 ist ein Ausführungsbeispiel des Dichtungselements 30 dargestellt.

Das Dichtungselement 30 hat die Form einer Kreisringscheibe und ist einstückig aus einem gummielastischen Material hergestellt. An seinem Außenumfang weist das Dichtungselement 30 einen Wulst 31 auf. Das Dichtungselement 30 wird mit dem Wulst 31 zwischen dem Gehäuse 21 und dem Motorgehäuse 13 formschlüssig abdichtend festgelegt. Hierzu übergreift das Gehäuse 21 den Wulst 31 mit einer entsprechenden Aussparung.

In der Mitte weist das Dichtungselement 30 eine Öffnung auf, deren Innendurchmesser dem Außendurchmesser der Welle 22 entspricht und die die Welle 22 formstabil umschließt. Am Innenumfang der Öffnung sind Dichtlippen 32 (im dargestellten Ausführungsbeispiel zwei Dichtlippen 32) angeformt, die in Umfangsrichtung verlaufen und unter leichtem Druck, jedoch geringer Reibung an der Welle 22 anliegen.

In dem radialen Bereich zwischen der Öffnung und dem Wulst 31 ist das Dichtungselement 30 wellenförmig mit in radialer Richtung aufeinanderfolgenden konzentrischen Wellenbergen und Wellentälern 33 ausgebildet. Aufgrund der wellenförmigen Ausbildung und der Materialeigenschaften des gummielastischen Werkstoffes weist das Dichtungselement 30 einerseits eine flexible Verformbarkeit in axiale Richtung und andererseits eine Formstabilität und Verdrehsteifigkeit in Umfangsrichtung auf. Die Verformbarkeit des Dichtungselements 30 in axialer Richtung ermöglicht eine Auswölbung des Dichtungselements 30, so daß dieses einem Druckgefälle zwischen dem Motorgehäuse 13 und dem Gehäuse 21 nachgeben kann.

In Figur 4 ist eine abgewandelte Ausführung der Drehwinkel-Meßvorrichtung dargestellt.

In dieser Ausführung sitzt auf der Welle 22 ein mit der Welle 22 verbundenes Rotorteil 25, das beispielsweise als mit Winkelinformationen versehene Scheibe ausgebildet ist. Ein Statorteil 26, welches die Abtastung für das Rotorteil 25 trägt, ist mittels Kugellagern 27 drehbar auf der Welle 22 gelagert.

Das Statorteil 26 ist an dem Dichtungselement 30 festgelegt, wobei das Dichtungselement 30 die einzige Kupplung zwischen dem Statorteil 26 und dem Gehäuse 21 bildet. Das Dichtungselement 30 kuppelt das Statorteil 26 verdrehsteif mit dem Gehäuse 21, läßt aufgrund seiner flexiblen elastischem Verformbarkeit jedoch axiale und radiale Bewegungen des Statorteils 26 zu. Das Statorteil 26 kann auf diese Weise axialen und radialen Bewegungen der Welle 22 folgen, falls beim Anbau der Meßvorrichtung 20 an den Elektromotor 10 Fluchtungsfehler zwischen der Welle 22 und der Motorwelle 14 auftreten.

Ist das Dichtungselement 30 in der in den Figuren 2 und 3 dargestellten Form ausgebildet, so wird das Statorteil 26 vorzugsweise an einem äußeren Ringbereich 34 des Dichtungselements 30 festgelegt. Die Verformbarkeit des Dichtungselements 30 erlaubt eine axiale und radiale Bewegung der Welle 22 mit dem auf der Welle 22 sitzenden Statorteil 26. Dabei bewegt sich der innere Bereich des Dichtungselements 30 bis zu dem an dem Statorteil 26 befestigten Ringbereich 34 zusammen mit der Welle 22 und dem Statorteil 36 axial und radial. Der radial äußere Bereich des Dichtungselements 30 zwischen dem am Gehäuse 21 festgelegten Außenumfang und dem an dem Statorteil 26 festgelegten Ringbereich 34 ermöglicht diese axiale und radiale Bewegung, hält jedoch das Statorteil 26 winkelfest und verdrehsteif in bezug auf das Gehäuse 21. Die ein Druckgefälle ausgleichende flexible Verformung des Dichtungselements 30 erfolgt vorzugsweise in dem radial inneren Bereich des Dichtungselements 30 innerhalb des an dem Statorteil 26 festgelegten Ringbereichs 34.

### BEZUGSZEICHENLISTE

- 10: Elektromotor
- 11: Stator
- 12: Rotor
- 13: Motorgehäuse
- 14: Motorwelle
- 15: Dichtung
- 16: Anschluß

- 20: Drehwinkel-Meßvorrichtung
- 21: Gehäuse
- 22: Welle
- 23: Abtastung
- 24: Anschluß
- 25: Rotorteil
- 26: Statorteil
- 27: Kugellager

- 30: Dichtungselement
- 31: Wulst
- 32: Dichtlippen
- 33: Wellenberge und -täler
- 34: Ringbereich

## Patentansprüche

1. An einen Motor (10) anbaubare Drehwinkel-Meßvorrichtung (20), mit einer Welle (22), die mit der Motorwelle (14) kuppelbar ist, und mit einem Gehäuse (21), das an das Motorgehäuse (13) anbaubar ist, dadurch gekennzeichnet, daß das Gehäuse (21) anbauseitig durch ein flächiges Dichtungselement (30) verschlossen ist, welches an seinem Außenumfang (31) an dem Gehäuse (21) festgelegt ist, welches an seinem Innenumfang (32) dichtend an der Welle (22) anliegt und welches zumindest in einem Teilbereich (33) seiner Fläche flexibel verformbar ist.

2. Meßvorrichtung nach Anspruch 1, dadurch gekennzeichnet, daß das Dichtungselement (30) zumindest in seinem flexiblen Teilbereich (33) aus einem gummielastischen Material besteht.

3. Meßvorrichtung nach Anspruch 1 oder 2, dadurch gekennzeichnet, daß das Dichtungselement (30) mit seinem äußeren Umfangsrand (31) zwischen dem Gehäuse (21) der Meßvorrichtung und dem Motorgehäuse (13) festgelegt ist.

4. Meßvorrichtung nach einem der Ansprüche 1 bis 3, dadurch gekennzeichnet, daß das Dichtungselement (3) an seinem Innenumfang mit wenigstens einer Dichtlippe (32) an der Welle (22) anliegt.

5. Meßvorrichtung nach einem der vorhergehenden Ansprüche, dadurch gekennzeichnet, daß das Dichtungselement (30) als kreisringförmige Scheibe ausgebildet ist.

6. Meßvorrichtung nach den Ansprüchen 2 und 5, dadurch gekennzeichnet, daß das Dichtungselement (30) eine einstückige Scheibe aus gummielastischem Material ist.

7. Meßvorrichtung nach Anspruch 6, dadurch gekennzeichnet, daß die Scheibe wellenförmig miteinander in radialer Richtung abwechselnden konzentrischen Wellenbergen und Wellentälern (33) ausgebildet ist.

8. Meßvorrichtung nach den Ansprüchen 3 und 6, dadurch gekennzeichnet, daß das Dichtungselement mit einem an seinem Außenumfang ausgebildeten Wulst (31) zwischen dem Gehäuse (21) der Meßvorrichtung und dem Motorgehäuse (13) abdichtend und radial formschlüssig festgelegt ist.

9. Meßvorrichtung nach einem der vorhergehenden Ansprüche, bei welcher ein Statorteil drehbar auf der Welle gelagert ist und über eine radial und axial nachgiebige, jedoch winkelsteife Kupplung mit dem Gehäuse verbunden ist, dadurch gekennzeichnet, daß das Dichtungselement (30) als Kupplung dient und das Statorteil (26) in einem konzentrischen Ringbereich (34) drehfest mit dem Dichtungselement (30) verbunden ist.

10. Meßvorrichtung nach Anspruch 9, dadurch gekennzeichnet, daß der Ringbereich (34) eine größere Materialstärke aufweist.

11. Meßvorrichtung nach einem der vorhergehenden Ansprüche, dadurch gekennzeichnet, daß die Winkelstellung der Welle (22) in der Meßvorrrichtung (20) optisch abgetastet wird.

12. Meßvorrichtung nach einem der vorhergehenden Ansprüche, dadurch gekennzeichnet, daß der Motor ein Elektromotor (10) ist.

## Claims

1. A device for measuring the angle of rotation (20) which can be mounted on a motor (10), having a shaft (22), which can be coupled with the motor shaft (14), and having a housing (2), which can be mounted onto the motor housing (13),
**characterised in that** the housing (21) is sealed on the mounting side by a flat sealing element (30), which is fixed at its outer periphery (31) to the housing (21), which on its inner periphery (32) abuts the shaft (22) in sealing manner and which is flexibly deformable at least in a sub-region (33) of its surface.

2. A measuring device according to Claim 1,
**characterised in that** the sealing element (30) is made from a rubber material at least in its flexible sub-region (33).

3. A measuring device according to Claim 1 or 2,
**characterised in that** the sealing element (30) is fixed by its outer peripheral edge (31) between the housing (21) of the measuring device and the motor housing (13).

4. A measuring device according to one of Claims 1 to 3,
**characterised in that** on its inner periphery the sealing element (3) abuts the shaft (22) by at least one sealing lip (32).

5. A measuring device according to one of the preceding Claims,
**characterised in that** the sealing element (30) is constructed as a disc in the shape of a circular ring.

6. A measuring device according to Claims 2 and 5,
**characterised in that** the sealing element (30) is a single-piece disc made from rubber material.

7. A measuring device according to Claim 6,
**characterised in that** the disc has an undulating construction with concentric wave crests and wave troughs (33) alternating in the radial direction.

8. A measuring device according to Claims 3 to 6,
**characterised in that** the sealing element is fixed in a sealing and radially form-fit manner by a bead (31) constructed on its outer periphery between the housing (21) of the measuring device and the motor housing (13).

9. A measuring device according to one of the preceding Claims, in which a stator part is rotatably mounted on the shaft and is connected to the housing via a radially and axially flexible, but angularly rigid coupling,
**characterised in that** the sealing element (30) serves as a coupling and the stator part (26) in a concentric annular region (34) is connected to the sealing element (30) in a rotationally secure manner.

10. A measuring device according to Claim 9,
**characterised in that** the annular region (34) has a greater material thickness.

11. A measuring device according to one of the preceding Claims,
**characterised in that** the angular position of the shaft (22) in the measuring device (20) is optically scanned.

12. A measuring device according to one of the preceding Claims,
**characterised in that** the motor is an electric motor (10).

## Revendications

1. Dispositif de mesure de l'angle de rotation (20) destiné à être monté sur un moteur (10), comprenant un arbre (22) destiné à être couplé à l'arbre (14) du moteur et qui se monte avec son boîtier (21) sur le boîtier (13) du moteur,
caractérisé en ce que
le boîtier (21) est fermé du côté de sa face de montage par un élément d'étanchéité (30) plat, fixé au boîtier (21) par sa périphérie extérieure (31) et dont la périphérie intérieure (32) est appliquée de manière étanche contre l'arbre (22), et la surface de cet élément d'étanchéité est déformable souple au moins dans une zone partielle (33).

2. Dispositif de mesure selon la revendication 1,
caractérisé en ce que
l'élément d'étanchéité (30) est en une matière ayant l'élasticité du caoutchouc au moins dans sa zone partielle souple (33).

3. Dispositif de mesure selon la revendication 1 ou 2,
caractérisé en ce que
l'élément d'étanchéité (30) est fixé avec son bord extérieur (31) entre le boîtier (21) du dispositif de mesure et le boîtier (13) du moteur.

4. Dispositif de mesure selon l'une des revendications 1 à 3,
caractérisé en ce que
l'élément d'étanchéité (30) est appliqué contre l'arbre (2) par son bord intérieur ayant au moins une lèvre d'étanchéité (32).

5. Dispositif de mesure selon l'une des revendications précédentes,
caractérisé en ce que
l'élément d'étanchéité (30) est une rondelle circulaire.

6. Dispositif de mesure selon l'une des revendications 2 et 5
caractérisé en ce que
l'élément d'étanchéité (30) est une rondelle en matière ayant l'élasticité du caoutchouc, en une seule pièce.

7. Dispositif de mesure selon la revendication 6
caractérisé en ce que
la rondelle présente ensemble des ondulations avec des sommets et des creux d'ondulation (33) qui alternent dans la direction radiale.

8. Dispositif de mesure selon l'une des revendications 3 et 6
caractérisé en ce que
l'élément d'étanchéité est fixé par le bourrelet (31) de son bord extérieur entre le boîtier (21) du dispositif de mesure et le boîtier (13) du moteur, de manière étanche par une liaison par la forme dans la direction radiale.

9. Dispositif de mesure selon l'une des revendications précédentes, avec une partie de stator montée à rotation sur l'arbre et reliée au boîtier par une liaison souple radialement et axialement, mais rigide angulairement,
caractérisé en ce que
l'élément d'étanchéité (30) constitue le moyen de liaison et la partie de stator (26) est reliée solidairement en rotation à l'élément d'étanchéité (30) dans une zone annulaire (34) concentrique.

10. Dispositif de mesure selon la revendication 9,
caractérisé en ce que
la zone annulaire (34) est celle présentant la plus grande épaisseur de matière.

11. Dispositif de mesure selon l'une quelconque des revendications précédentes,
caractérisé en ce que
la position angulaire de l'arbre (22) est détectée de manière optique dans le dispositif de mesure (20).

12. Dispositif de mesure selon l'une quelconque des revendications précédentes,
caractérisé en ce que
le moteur est un moteur électrique (10).
